Europäisches Patentamt

European Patent Office

Office européen des brevets

(11) Publication number: **0 439 707 A2**

# EUROPEAN PATENT APPLICATION

(21) Application number: **90122121.8**

(22) Date of filing: **20.11.90**

(51) Int. Cl.⁵: **G01G 23/18, G01G 13/02**

(30) Priority: **29.01.90 IT 290490**

(43) Date of publication of application:
**07.08.91 Bulletin 91/32**

(84) Designated Contracting States:
**DE ES FR GB IT**

(71) Applicant: **Moltrasio, Mario**
**Via Ruvigliana, 12**
**Viganello(CH)**

(72) Inventor: **Moltrasio, Mario**
**Via Ruvigliana, 12**
**Viganello(CH)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) Arrangement for the serial transmission of data between a rotary part and a static part, particularly for sack filling plants for incoherent material.

(57) A unit comprising a mutually cooperating photosensor (for example a photodiode) and photoemitter (LED) is positioned between a rotatably supported serial data source, in this case a control unit for example for the weight of powder product sacked in a sack filling machine, and a stationary receiver for such data, for example a data recorder or a processor.

EP 0 439 707 A2

## ARRANGEMENT FOR THE SERIAL TRANSMISSION OF DATA BETWEEN A ROTARY PART AND A STATIC PART, PARTICULARLY FOR SACK FILLING PLANTS FOR INCOHERENT MATERIAL

This invention relates to an arrangement for the serial transmission of data between a source and receiver which rotate one relative to the other. More particularly, the invention relates to an arrangement for the serial transfer of data from one or more electronic weight control units of a rotary sack filling plant for powder or incoherent products (such as cement, plastics etc.) to a stationary data recorder or processor.

With particular reference to the field of rotary sack filling plants, these have a known rotary structure carrying a series of delivery ports for the incoherent product, on which valve-type sacks are mounted to be filled with a predetermined quantity of product leaving the ports. An individual electronic weighing device is associated with each port, the weight being processed by an electronic control unit. Both the device and the control unit rotate with the port. In addition to controlling the weight of product fed into the sack, the control unit also provides a digital indication both of the weight of product effectively sacked and of any malfunction occurring during the filling process. The need to control both the weight and the general plant operation together with requirements of a statistical nature mean that data from each control unit, which are available in serial form, have to be fed to a stationary recorder or to a processor provided for process control or for analysis of a statistical or functional type.

Again, if it is required to change the weight or exclude a port, and thus act on the control unit which controls it, serial data again have to be transmitted but in the reverse direction, ie from the processor to the control unit, which in this case acts as the receiver.

The problem is therefore to effectively and reliably convey data in serial form from a source to a receiver rotating relative to each other, with reliability, precision and simplicity.

This problem is solved according to the invention by eliminating unreliable material connections, ie physical connections, between a source and receiver which rotate relative to each other about an axis, and instead providing a connection for serial data transmission between the source and receiver which is in the form of an arrangement involving cooperation between at least one photoemitter and at least one photosensor, at least one of which is disposed in proximity to the axis of rotation or to the prolongation of said axis.

With particular reference to known rotary sack filling plants, the weighing control unit can act as source and/or receiver and the processor as receiver and/or source for the data transmitted in serial form.

The invention will be more apparent from the detailed description of a preferred embodiment thereof given hereinafter by way of non-limiting example and illustrated on the accompanying drawing in which:

Figure 1 is a schematic side elevation of a sack filling plant provided with the transmitting arrangement according to the invention;

Figure 2 shows a connection scheme for the sack filling plant of Figure 1, the sack filling plant being shown in plan view with only some of its peripheral ports;

Figure 3 shows the application of the invention to the control of a mechanical robot arm.

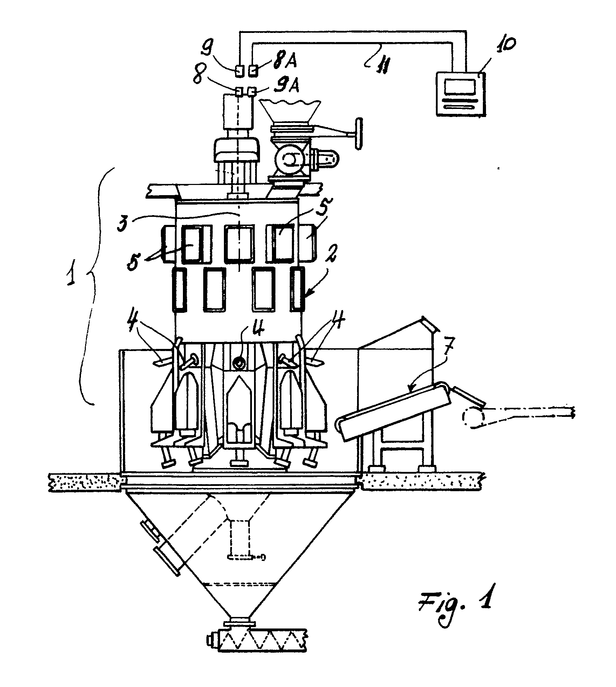

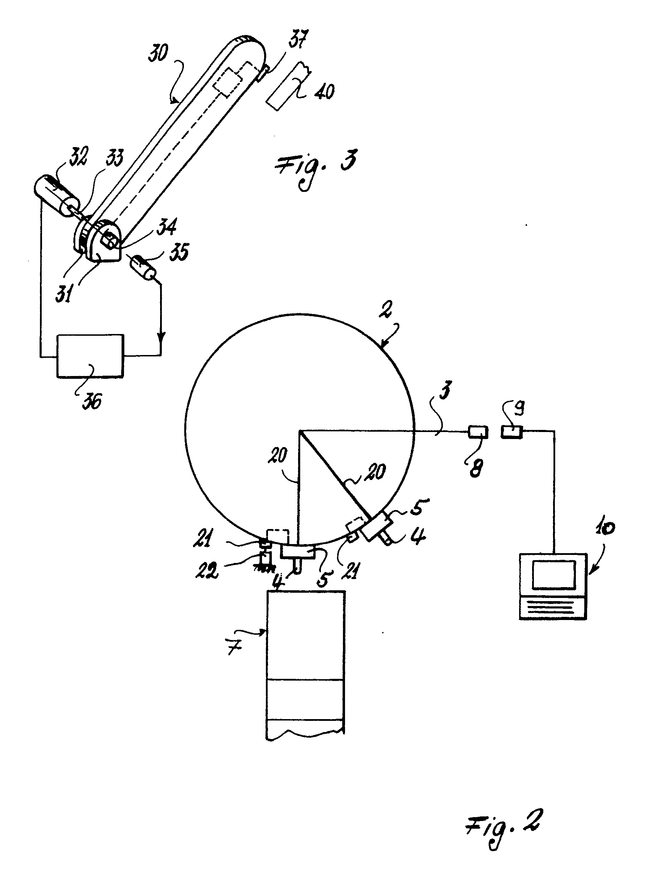

In Figures 1 and 2 the reference numeral 1 indicates overall a rotary sack filling plant designed to feed set weight quantities of an incoherent product (such as cement) into conventional sewn or glued sacks of valve type.

In known manner, the sack filling plant comprises a structure 2 rotating about a vertical axis 3 driven by a geared motor unit, not shown on the drawing. The structure in question carries a series of equidistant product delivery ports on which the valve sacks are mounted in known manner by conventional means. The filled sacks are discharged from the sack filling plant also in known manner and by conventional means onto a conveyor belt 7. With each port 4 there is associated an electronic weighing device where, in known manner, the weight is measured by a load cell and is processed by a corresponding electronic control unit 5 so as to correctly and properly introduce the set quantity of incoherent product.

The data relative for example to the quantity of product introduced into a given sack and the manner in which sack filling proceeds are stored by the control unit in a memory. When sack filling terminates and the port 4 moves into proximity with the transfer conveyor 7, a microswitch 21 connected to the control unit is activated by its proximity to an external fixed reference marker 22 to enable the control unit to transmit data in serial form from the memory in which they are stored to, for example, a light emitting diode (LED) 8, the emission from which follows and hence reproduces the signal which it receives from the memory. The light emitting diode 8 is positioned at least approximately coaxial with the vertical axis 3 about which the sack filling plant rotates. The emission from the light emitting diode is received by the preferably coaxial stationary photosensor (photodiode) 9, which is connected to a receiver 10, for example a recorder or processor, where the received data are collected and processed. The photodiode can also be positioned not coaxially, in which case if external to the light cone emitted by the emitter optical means are provided to direct it towards the emission from the LED 8.

If the receiver 10 is a processor it can also be used to control the sack filling process. In this case in addition to handling the received data it can emit command signals through an output line 11 which enables the control unit 5 to be acted upon via an arrangement comprising a photoemitter 8A (light emitting diode) and photosensor 9A (coaxial or at least close to the axis 3). Figure 2 shows the scheme of the plant of Figure 1 with parts reproduced in plan. The scheme shows the rotary sack filling plant 2, the delivery ports 4 (only some of which are shown) with their weight control units 5, the electrical connections 20 to the various control units 5, with the output line extending along the axis 3 (which is indicated in this figure by this reference numeral), the light emitting diode 8, the substantially coaxial photodiode 9, the receiver 10 (for example a recorder or processor), and the microswitch 21 associated with the control unit 5 for enabling data transmission to the emitter 8 and from here to the receiver 10 when it corresponds with the fixed reference marker 22, which is positioned such that data transmission occurs within the time between the end of the last weighing operation and the beginning of the next.

A different application regarding a schematically illustrated robot is shown in Figure 3. This figure shows an arm 30 supported rotatably at one end between a pair of supports 31. The arm is rotated (in both directions) by a reversible electric motor/reduction gear unit 32, the output shaft 33 of which is rigid with the arm. An LED 34 is located rigid with the shaft and hence with the arm in a position substantially coaxial with the shaft, and in front of it but stationary there is located a photodiode 35 connected electrically to a processor 36 which controls the geared motor 32. The LED 34 is connected (dashed line) to a sensor or pressure cell 37 projecting from the other end of the arm 30. The connection is made via an analog/digital converter which converts the analog signal of the cell 37 into a digital signal to be fed to the LED 34. The arm is driven by the motor 32, the cell 37 makes contact with a member 40 and the pressure exerted on this latter increases.

When the pressure reaches a given threshold value the motor unit 32 stops. The data are fed to the processor 32 via the component pair 34/35. Electric power is fed to the devices contained in the arm via a conventional connection of the type comprising rings and fixed contacts which slide on them.

## Claims

1. An arrangement for the serial transmission of data between a source and receiver which rotate relative to each other about an axis, characterised in that the connection for data transmission purposes is in the form of an arrangement (8, 9, 8A, 9A, 34, 35) involving cooperation between at least one photoemitter and at least one photosensor, at least one of which is disposed at least in proximity to the axis of rotation or to its prolongation.

2. An arrangement as claimed in claim 1, characterised in that the source is a weight control unit (5) of a rotary sack filling plant (1) for incoherent products, and the receiver is a data recorder or a processor (10) and/or vice versa, the photoemitter (8) being positioned at least in proximity to the axis of rotation (3) of the sack filling plant.

3. An arrangement as claimed in claim 2, characterised in that the processor (10) has a control line (11) which transmits serial data to the weight control units (5) via a photoemitter/photosensor arrangement (8A, 9A), the photosensor being positioned at least in proximity to the axis of rotation (3) of the sack filling plant (1).

Fig. 1

4

Fig. 3

Fig. 2